Europäisches Patentamt

European Patent Office

Office européen des brevets

(11) Veröffentlichungsnummer: **0 619 504 A1**

# (12) EUROPÄISCHE PATENTANMELDUNG

(21) Anmeldenummer: **94105480.1**

(51) Int. Cl.5: **G02B 1/10**

(22) Anmeldetag: **08.04.94**

(30) Priorität: **08.04.93 DE 4311572**

(43) Veröffentlichungstag der Anmeldung:
**12.10.94 Patentblatt 94/41**

(84) Benannte Vertragsstaaten:
**AT BE CH DE FR GB IT LI NL SE**

(71) Anmelder: **Optische Werke G. Rodenstock
Isartalstrasse 43
D-80469 München (DE)**

(72) Erfinder: **Scherg, Gerd-Peter, Dr.
Röntgenstrasse 45
D-82131 Martinsried (DE)**
Erfinder: **Schöbl, Medard
Bruckerstrasse 11a
D-82290 Landsberied (DE)**
Erfinder: **Vögt, Michael, Dr.
Georg-Hallmair-Strasse 4
D-81369 München (DE)**

(74) Vertreter: **Münich, Wilhelm, Dr.
Kanzlei Münich, Steinmann, Schiller
Wilhelm-Mayr-Str. 11
D-80689 München (DE)**

(54) **Antireflex-Belag.**

(57) Beschrieben wird ein Antireflex-Belag für ein Brillenglas aus Poly(-di-ethylenglycolbisallylcarbonat), Polycarbonat, Polymethylmethacrylat, Polythiourethanen, Poly(bisphenol-A-bis-allylcarbonat)
Die Erfindung zeichnet sich dadurch aus, daß die oberste Schicht des Antireflex-Schichtsystems eine niederbrechende Schicht mit einer Dicke zwischen 0,5..1,5* $\lambda/4$ für eine in der Brillenoptik übliche Bezugswellenlänge ist, die wenigstens teilweise aus mindestens einem Metallfluorid mit einem Brechungsindex $\leq$ 1,43 besteht.

EP 0 619 504 A1

Die Erfindung bezieht sich auf einen Antireflex-Belag für ein Brillenglas aus den im Oberbegriff des Patentanspruchs 1 angegebenen Kunststoffmaterialien.

Neben dem in der Vergangenheit fast ausschließlich für Brillengläser aus Kunststoff mit mittlerer bis guter Qualität eingesetzten Poly-(Diethylenglycolbisallylcarbonat) - auch bekannt unter der Handelsbezeichnung CR39 - werden seit einiger Zeit verstärkt auch andere Kunststoffmaterialien in Betracht gezogen, die einen höheren Brechungsindex (1,6 bis 1,7) als Poly-(diethylenglycolbisallylcarbonat) haben, dessen Brechungsindex $n = 1,5$ ist.

Bei allen genannten Kunststoffmaterialien stellt sich jedoch folgendes Problem:

Da die Temperaturbeständigkeit von Brillengläsern aus Kunststoff sehr viel geringer als die Temperaturbeständigkeit von Brillengläsern aus "Silikatglas" ist, sind in der Vergangenheit eine Reihe von Schichtmaterialien für Entspiegelungs- bzw. Antireflexbeläge, die sich bei Brillengläsern aus Silikatglas als sehr effektiv erwiesen haben, für Brillengläser aus Kunststoffmaterial nicht in Betracht gezogen worden:

Nur beispielsweise wird auf das Standardwerk Dünnschicht-Technologie von Kienel, erschienen im VDI-Verlag, verwiesen, in dem auf Seite 474 wörtlich ausgeführt ist:

Die Temperatur darf beim CR 39 rund $100 °C$ nicht überschreiten. Versuche haben ergeben, daß $MgF_2$-Schichten, bei dieser Temperatur auf Kunststoff aufgedampft, keinesfalls den Gebrauchsansprüchen genügen. Da andere Beschichtungsmaterialien mit einer Brechzahl, die wesentlich kleiner als die des CR 39, nicht verfügbar sind, ist bei Kunststoffbrillengläsern eine Reflexionsminderung durch eine Einfachschicht praktisch nicht möglich.

Aufgrund dieser sowie ähnlichen, in anderen Lehrbüchern zu findenden Aussagen ist in der Vergangenheit die Verwendung von Metallfluoriden und insbesondere von $MgF_2$-Schichten für Brillengläser aus den im Oberbegriff des Patentanspruchs 1 genannten Kunststoffmaterialien nicht in Betracht gezogen worden.

Lediglich für dünne Polyesterfolien ist in der DE 39 41 796 A1 die Verwendung von $MgF_2$-Schichten vorgeschlagen worden. Die Verhältnisse bei Polyesterfolien sind jedoch nicht mit den Verhältnissen bei dicken Substraten - wie sie Brillengläser darstellen - aus den eingangs genannten Kunststoffmaterialien vergleichbar

Die Erfindung geht nun von der Erkenntnis aus, daß es - entgegen der in der Literatur vertretenen Auffassung - doch möglich ist, Metallfluorid-Schichten und insbesondere $MgF_2$-Schichten auf Brillengläser aus Poly(-diethylenglycolbisallylcarbonat), Polycarbonat, Polymethylmetylacrylat, Polythiourethanen, Poly-(bisphenol-A-bisallylcarbonat) derart aufzubringen, daß die Schichten den üblichen Gebrauchsansprüchen hinsichtlich Abriebfestigkeit, Lebensdauer etc. genügen. Geeignete Verfahren sind beispielsweise plasmaunterstützte Aufdampfverfahren, wie sie exemplarisch in der EP 0 463 230 A1 beschrieben sind, aber auch (bedingt) Sputter-Verfahren.

Demgemäß wird erfindungsgemäß vorgeschlagen, daß die oberste Schicht des Antireflex-Schichtsystems für Brillengläser aus den im Oberbegriff des Patentanspruchs 1 angegebenen Materialien eine niederbrechende Schicht mit einer Dicke zwischen $0,5...1,5 * \lambda /4$ für eine in der Brillenoptik übliche Bezugswellenlänge ist, die wenigstens teilweise aus mindestens einem Metallfluorid mit einem Brechungsindex $\leq 1,43$ besteht.

Die Bezugswellenlänge $\lambda$ kann dabei insbesondere 550 nm sein.

Als Metallfluoride kommen u.a. Aluminiumfluorid, Calciumfluorid, Lithiumfluorid, Natriumaluminiumfluorid (Kryolith, Chiolith oder NaF), Yttriumfluorid, Bariumfluorid, Hafniumfluorid, Scandiumfluorid oder Strontiumfluorid in Frage. Besonders bevorzugt ist jedoch die Verwendung von Magnesiumfluorid ($MgF_2$).

Dabei ist es insbesondere möglich, daß der Antireflexbelag entgegen der in der Literatur vertretenen Meinung eine einzige Schicht, nämlich eine Schicht beispielsweise aus $MgF_2$ aufweisen kann.

Selbstverständlich sind aber auch aus mehreren Schichten aufgebaute Schichtsysteme möglich:

So ist es möglich, unter der niederbrechenden Schicht eine hochbrechende Schicht mit einer Dicke $< \lambda /4$ vorzusehen, die insbesondere einen Brechungsindex zwischen 1,7 und 2,4 und eine Dicke zwischen 4 nm und 30 nm aufweisen kann.

Ein geeignetes Material für diese hochbrechende Schicht ist beispielsweise Tantalpentoxid, das den Vorteil hat, daß es mit den gleichen Verfahren wie Magnesiumfluorid aufgedampft werden kann. Selbstverständlich können aber auch andere hochbrechende Materialien und insbesondere andere hochbrechende Metalloxide, wie beispielsweise $TiO_2$ verwendet werden, das einen Brechungsindex $n = 2,4$ hat.

Neben der Realisierung von 1- oder 2-schichtigen Belägen ist auch die Realisierung von Belägen mit mehr als zwei Schichten, beispielsweise mit vier Schichten möglich.

Beispiele hierfür sind in den Ansprüchen 12 bis 14 angegeben.

Darüberhinaus kann jede der bei dem erfindungsgemäßen Belag eingesetzten Schichten auch in mehrere aus unterschiedlichen Materialien bestehende Schichtsysteme "aufgespalten" werden.

So ist es möglich, die oberste aus einem Metallfluorid und insbesondere aus $MgF_2$ bestehende Schicht in zwei Schichten aufzuspalten, von denen die eine als Haftvermittler dient und insbesondere aus $Al_2O_3$ mit einer Dicke bis zu 20 nm bestehen kann. Auf der als Haftvermittler dienenden Schicht wird dann die Metallfluoridschicht mit einer Dicke insbesondere zwischen 50 und 150 nm aufgebracht.

Ferner ist es möglich auf der Metallfluorid-Schicht einen Schutzfilm mit einer Dicke zwischen ca. 1 nm und 20 nm aufzubringen, der insbesondere ein Lack, beispielsweise ein Tauchlack, oder eine Plasmapolymerisationsschicht sein kann. Selbstverständlich können die vorgenannten Maßnahmen auch miteinander kombiniert werden.

Weiterhin ist es bevorzugt, wenn der Belag zusätzlich eine direkt auf dem Kunststoffmaterial des Brillenglases aufgebrachte Haftschicht und/oder eine Hartschicht aufweist. Die Haftschicht, die aus einem leichtoxidierenden Material bestehen sollte, kann beispielsweise aus $SiO_x$ oder $CrO_x$, jeweils mit $0,5 \leq x \leq 2$ und/oder einem Polymer bestehen und bevorzugt eine Dicke von weniger als 100 nm aufweisen.

Die Hartschicht, die bevorzugt eine Dicke zwischen 300 nm und 10000 nm aufweist, kann aus Siliziumdioxid, einem Lack, beispielsweise einem Epoxid- und insbesondere einem Polysiloxanlack, einer Plasmapolymerisations-schicht, die ebenfalls insbesondere aus einem Siloxan bestehen kann, und/oder einem "Diamond-like-Coating", d.h. einem sogenannten DLC-Film bestehen. Dabei ist es bevorzugt, wenn der Hartschicht hochbrechende Materialien derart zugesetzt sind, daß diese einen Brechungsindex-Gradienten in Richtung ihrer Schichtdicke aufweist. Hierdurch werden Oszillationen im Reflexionsfaktor zumindest abgebaut. Als hochbrechendes Material kann beispielsweise Tantalpentoxid, aber auch andere Materialien, wie das bereits erwähnte Titanoxid verwendet werden.

Oszillationen des Reflexionsfaktors können weiterhin durch eine weitere Schicht mit einer Dicke zwischen $0,5...1,5 * \lambda /4$ und einem Brechungsindex, der zwischen dem Brechungsindex der Hartschicht und dem des Substrates oder der Haftschicht liegt, vermieden werden. Diese weitere Schicht kann beispielsweise aus $SiO_y$ mit $0,5 \leq y \leq 2$ bestehen, wobei bei einer ebenfalls aus $SiO_x$ bestehenden Haftschicht gilt: $x < y$.

Bevorzugt ist jedoch die Verwendung eines zwischengeschobenen weiteren Schichtsystems, das aus einer niederbrechenden und einer hochbrechenden Schicht besteht.

Dieses weitere Schichtsystem ist insbesondere zwischen Haftschicht und Hartschicht angeordnet.

Bei einer bevorzugten Ausführungsform der Erfindung werden die Schichten so ausgewählt, daß es möglich ist, sämtliche Schichten mittels eines plasmaunterstützten Aufdampfverfahrens aufzubringen, das den Vorteil hat, daß die Temperatur des Substrats während des Aufdampfvorganges höchstens 100 °C erreicht und dennoch hervorragende mechanische Eigenschaften aufweist, wobei die empfindlichen Kunststoffmaterialien mit einem Brechungsindex bis 1,7 nicht geschädigt werden.

Die Erfindung wird nachstehend anhand von Ausführungsbeispielen unter Bezugnahme auf die Zeichnung näher beschrieben,

deren einzige Figur den mittleren Reflexionsfaktor für verschiedene Ausführungsbeispiele zeigt.

In der Zeichnung ist der (mittlere) Reflexionsfaktor [in Prozent] als Funktion der Wellenlänge [in Nanometer (nm)] für verschiedene erfindungsgemäß ausgebildete Schichtsysteme dargestellt. Der tatsächliche Reflexionsfaktor weist "Oszillationen" auf, die - wie weiter unten noch erläutert wird - durch ein zwischen Haftschicht und Haftschicht angeordnetes Schichtsystem gedämpft werden können.

Bei den Schichtsystemen 1 bis 4 wird ein Substrat mit einem Brechungsindex n = 1,6 verwendet, auf dem eine Haftschicht aus $SiO_x$ mit einem Brechungsindex von 1,7 und einer Dicke von 5 nm aufgebracht ist, auf der wiederum eine Hartschicht aus $SiO_2$ mit einer Dicke von 3000 nm und einem Brechungsindex von 1,46 aufgebracht ist.

Bei dem Schichtsystem 5 wird ein Substrat mit einem Brechungsindex von 1,5 verwendet.

### Schichtsystem 1

Das Schichtsystem 1 ist ein (Einfach-)Schichtsystem, das lediglich die vorstehend beschriebene Haftschicht und die Hartschicht und hierauf eine Schicht aus $MgF_2$ mit einer Dicke von 96 nm aufweist. Mit dem Bezugszeichen 1 ist die (mittlere) Reflexionskurve 1 bezeichnet, die man mit diesem Schichtsystem erhält.

### Schichtsystem 2

Das Schichtsystem 2 weist wiederum eine Haftschicht und eine Hartschicht mit den vorstehend angegebenen Dicken auf. Auf der Hartschicht ist eine $Ta_2O_5$-Schicht mit einer Dicke von 8,3 nm und einem Brechungsindex n = 2,1 und hierauf eine Schicht aus $MgF_2$ mit einer Dicke von 123 nm und einem Brechungsindex n = 1,38 aufgebracht. Mit 2 ist wiederum die zugehörige mittlere Reflexionskurve bezeichnet.

Schichtsystem 3

Bei dem Schichtsystem 3 ist auf der Hartschicht ein vierschichtiges Schichtsystem aufgebracht, das wie folgt aufgebaut ist:

```
        unterste Schicht
              Ta₂O₅              6,7  nm, Brechungsindex: 2,1
              Al₂O₃             58   nm                    1,63
              Ta₂O₅            127   nm                    2,1
              MgF₂             96   nm                    1,38
        oberste Schicht.
```

3 bezeichnet die zugehörige mittlere Reflexionskurve.

Bei dem Schichtsystem 3 ist ferner zwischen Hartschicht und Haftschicht ein Zwischensystem eingeschoben, das die Oszillationen dämpft. Die Reflexionskurve 3 ergibt sich mit diesem Zwischensystem.

Schichtsystem 4

Das Schichtsystem ist eine Modifikation eines vierschichtigen Systems, bei dem sich auf der Hartschicht ein Schichtsystem befindet, dessen dritte (hochbrechende) Schicht in zwei Schichten aufgespalten ist, und das wie folgt aufgebaut ist:

```
        unterste Schicht
              Ta₂O₅             12,6  nm, Brechungsindex: 2,1
              Al₂O₃             52,8  nm                    1,63
              TiO₂              22,5  nm                    2,4
              Ta₂O₅             93,1  nm                    2,1
              MgF₂             97,6  nm                    1,38
        oberste Schicht.
```

Das Bezugszeichen 4 bezeichnet wiederum die mittlere Reflexionskurve.

Schichtsystem 5

Im Gegensatz zu den Schichtsystemen 1 bis 4, die auf einem Substrat mit einem Brechungsindex $n = 1,6$ aufgebracht sind, ist das Schichtsystem 5 auf einem Substrat mit einem Brechungsindex $n = 1,5$ aufgebracht. Bei dem Schichtsystem handelt es sich um eine Einfachschicht aus $MgF_2$ mit einer Dicke von 96 nm, die auf einer Hartschicht aus $SiO_2$ mit einer Dicke von 3000 nm und einem Brechungsindex von 1,46 aufgebracht ist, die wiederum auf einer Haftschicht aus $SiO_x$ mit einem Brechungsindex von 1,7 und einer Dicke von 5 nm aufgebracht ist, die für eine gute Verbindung zum Substrat beispielsweise aus CR 39 sorgt.

Das Bezugszeichen 5 bezeichnet die mittlere Reflexionskurve dieses Schichtsystems.

Die dargestellten Reflexionsfaktoren zeigen, daß sämtliche Schichten bezogen auf die Komplexität des jeweiligen Schichtaufbaus hervorragende Antireflexionseigenschaften haben.

Vorstehend ist die Erfindung exemplarisch ohne Beschränkung des allgemeinen Erfindungsgedankens beschrieben worden:

Insbesondere sind die für die einzelnen Schichten angegebenen Zahlenwerte nicht als einschränkend zu betrachten. So erhält man gleichwertige Reflexionseigenschaften wie beim Schichtsystem 2, wenn man auf einer $Ta_2O_5$-Schicht mit einer Dicke von 7,2 nm eine Kryolith-Schicht mit einer Dicke von 123 nm und einem Brechungsindex von 1,35 aufbringt.

Als weiteres Beispiel für Modifikationen sei die Möglichkeit genannt, die oberste Schicht aufzuspalten. Beispielsweise kann das Schichtsystem 3 dadurch verbessert werden, daß die drei unteren Schichten beibehalten werden und die oberste Schicht aus $MgF_2$ in zwei Schichten aufgespalten wird. Diese beiden Schichten können beispielsweise aus $MgF_2$ mit einer Dicke von 89,2 nm und einer Plasmapolymerisationsschicht mit einer Dicke von 5 nm und einem Brechungsindex von $n = 1,5$ bestehen.

Weiterhin können die als Materialien für das Brillenglas angegebenen Materialien photochrom und/oder dauernd eingefärbt sein.

**Patentansprüche**

1. Antireflex-Belag für ein Brillenglas aus Poly(-diethylenglycolbisallylcarbonat),Polycarbonat, Polymethylmethylacrylat, Polythiourethanen, Poly(bisphenol-A-bis-allylcarbonat)
   dadurch **gekennzeichnet**, daß die oberste Schicht des Antireflex-Schichtsystems eine niederbrechende Schicht mit einer Dicke zwischen $0,5..1,5* \lambda /4$ für eine in der Brillenoptik übliche Bezugswellenlänge ist, die wenigstens teilweise aus mindestens einem Metallfluorid mit einem Brechungsindex $\leq 1,43$ besteht.

2. Belag nach Anspruch 1,
   dadurch **gekennzeichnet**, daß das Metallfluorid $MgF_2$ ist.

3. Belag nach Anspruch 1 oder 2,
   dadurch **gekennzeichnet**, daß die oberste Schicht aus wenigstens zwei Schichten besteht, von denen die untere Schicht, z.B. $Al_2O_3$, mit einer Dicke bis zu 20 nm als Haftvermittler dient, auf der die Metallfluorid-Schicht mit einer Dicke zwischen 50 und 150 nm aufgebracht ist.

4. Belag nach einem der Ansprüche 1 bis 3,
   dadurch **gekennzeichnet**, daß die niederbrechende oberste Schicht einen auf der Metallfluorid-Schicht aufgebrachten Schutzfilm mit einer Dicke zwischen ca. 1 nm und 20 nm aufweist.

5. Belag nach Anspruch 4,
   dadurch **gekennzeichnet**, daß der Schutzfilm eine Lackschicht oder eine Plasmapolymerisations-schicht ist.

6. Belag nach einem der Ansprüche 1 bis 5,
   dadurch **gekennzeichnet**, daß der Belag als einzige Schicht die Schicht aus $MgF_2$ aufweist.

7. Belag nach einem der Ansprüche 1 bis 6
   dadurch **gekennzeichnet**, daß unter der niederbrechenden obersten Schicht eine hochbrechende Schicht mit einer Dicke $< \lambda /4$ vorgesehen ist.

8. Belag nach Anspruch 7,
   dadurch **gekennzeichnet**, daß die hochbrechende Schicht einen Brechungsindex zwischen 1,7 und 2,4 und eine Dicke zwischen 4 und 30 nm aufweist.

9. Belag nach Anspruch 7 oder 8,
   dadurch **gekennzeichnet**, daß die hochbrechende Schicht aus $Ta_2O_5$ besteht.

10. Belag nach Anspruch 7 oder 8,
    dadurch **gekennzeichnet**, daß die hochbrechende Schicht aus einer $Ta_2O_5$-Schicht und einer weiteren Schicht mit einem Brechungsindex zwischen 1,7 und 2,4 besteht.

11. Belag nach Anspruch 10,
    dadurch **gekennzeichnet**, daß die weitere Schicht aus Yttriumoxid besteht.

12. Belag nach einem der Ansprüche 7 bis 11,
    dadurch **gekennzeichnet**, daß zwischen der hochbrechenden Schicht und der obersten niederbrechenden Schicht eine weitere Schicht mit vergleichsweise niedrigem Brechungsindex und eine weitere hochbrechende Schicht angeordnet sind.

13. Belag nach Anspruch 12,
    dadurch **gekennzeichnet**, daß die weitere Schicht mit vergleichsweise niedrigem Brechungsindex aus $Al_2O_3$ besteht und eine Dicke zwischen ca. 40 und 90 nm aufweist.

EP 0 619 504 A1

**14.** Belag nach Anspruch 12 oder 13,
dadurch **gekennzeichnet**, daß die hochbrechende Schicht aus $Ta_2O_5$ besteht und eine Dicke zwischen ca. 100 und 150 nm aufweist.

**15.** Belag nach einem der Ansprüche 1 bis 14,
dadurch **gekennzeichnet**, daß zumindest die Metallfluorid-Schichten mittels eines plasmaunterstützten Aufdampfverfahrens aufgebracht sind.

**16.** Belag nach einem der Ansprüche 1 bis 15,
dadurch **gekennzeichnet**, daß eine direkt auf dem Kunststoffmaterial des Brillenglases aufgebrachte Haftschicht und/oder eine Hartschicht auf dem Brillenglas vorgesehen ist.

**17.** Belag nach Anspruch 16,
dadurch **gekennzeichnet**, daß die Haftschicht aus einem leicht oxidierenden Material besteht.

**18.** Belag nach Anspruch 16 oder 17,
dadurch **gekennzeichnet**, daß die Haftschicht aus $SiO_x, CrO_x$ jeweils mit $0{,}5 \leq x \leq 2$ und/oder einem Polymer besteht.

**19.** Belag nach einem der Ansprüche 16 bis 18,
dadurch **gekennzeichnet**, daß die Haftschicht eine Dicke von weniger als ca. 100 nm hat.

**20.** Belag nach einem der Ansprüche 16 bis 19,
dadurch **gekennzeichnet**, daß die Hartschicht eine Schicht mit einer Dicke zwischen 300 nm und 10000 nm ist.

**21.** Belag nach Anspruch 20,
dadurch **gekennzeichnet**, daß die Hartschicht aus $SiO_2$, einem Lack und insbesondere einem Polysiloxanlack, einer Plasmapolymerisationsschicht insbesondere aus einem Siloxan und/oder einem DLC-Film besteht.

**22.** Belag nach Anspruch 21,
dadurch **gekennzeichnet**, daß der Hartschicht hochbrechende Materialien zugesetzt sind.

**23.** Belag nach Anspruch 22,
dadurch **gekennzeichnet**, daß das hochbrechende Material $Ta_2O_5$ ist.

**24.** Belag nach Anspruch 22 oder 23,
dadurch **gekennzeichnet**, daß der Zusatz von hochbrechendem Material nicht gleichmäßig erfolgt, so daß die Hartschicht einen Brechungsindex-Gradienten in Richtung ihrer Schichtdicke aufweist.

**25.** Belag nach einem der Ansprüche 16 bis 24,
dadurch **gekennzeichnet**, daß zwischen der Hartschicht und der Haftschicht zum Abbau von eventuellen Oszillationen des Reflexionsfaktors ein weiteres Schichtsystem vorgesehen ist.

**26.** Belag nach Anspruch 25,
dadurch **gekennzeichnet**, daß das weitere Schichtsystem aus einem hochbrechenden und einem niederbrechenden Material besteht.

**27.** Belag nach Anspruch 25,
dadurch **gekennzeichnet**, daß das weitere Schichtsystem aus einer Schicht mit einer Dicke zwischen $0{,}5 \dots 1{,}5 * \lambda/4$ und einem Brechungsindex besteht, der zwischen dem Brechungsindex der Hartschicht und dem der Haftschicht bzw. des Substrats liegt.

**28.** Belag nach Anspruch 26,
dadurch **gekennzeichnet**, daß die weitere Schicht aus $SiO_y$ mit $0{,}5 \leq y \leq 2$ besteht.

6

**29.** Belag nach Anspruch 27,
dadurch **gekennzeichnet**, daß bei einer aus $SiO_x$ bestehenden Haftschicht gilt: $x < y$.

**30.** Belag nach einem der Ansprüche 1 bis 28,
dadurch **gekennzeichnet**, daß sämtliche Schichten mittels eines plasmaunterstützten Aufdampfverfahrens aufgebracht sind.

**31.** Belag nach Anspruch 29,
dadurch **gekennzeichnet**, daß die Temperatur des Substrats während des Aufdampfvorgangs höchstens 100°C erreicht hat.

Europäisches Patentamt

EUROPÄISCHER RECHERCHENBERICHT

Nummer der Anmeldung

EP 94 10 5480

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | DATABASE WPI<br>Week 8334,<br>Derwent Publications Ltd., London, GB;<br>AN 83-743755<br>& JP-A-58 118 602 (ASAHI OPTICAL) 14. Juli 1983<br>* Zusammenfassung * | 1-4,8,9, 15,16, 21-23,30 | G02B1/10 |
| Y | | 1-5,15, 30,31 | |
| Y | PATENT ABSTRACTS OF JAPAN<br>vol. 9, no. 285 (P-404) (2008) 12. November 1985<br>& JP-A-60 126 601 (HOOYA) 6. Juli 1985<br>* Zusammenfassung * | 1-3 | |
| Y | FR-A-2 680 583 (CEA)<br>* Zusammenfassung; Abbildung 1 * | 4,5 | |
| D,Y | EP-A-0 463 230 (LEYBOLD)<br>* Zusammenfassung * | 15,30,31 | |
| P,X | EP-A-0 586 050 (NIKON)<br><br>* Seite 8, Zeile 48 – Seite 9; Abbildungen 1-17 * | 1-4,15, 30 | RECHERCHIERTE SACHGEBIETE (Int.Cl.5)<br>G02B |

Der vorliegende Recherchenbericht wurde für alle Patentansprüche erstellt

| Recherchenort | Abschlußdatum der Recherche | Prüfer |
|---|---|---|
| DEN HAAG | 21. Juli 1994 | Malic, K |

EPO FORM 1503 03.82 (P04C03)